# EUROPÄISCHE PATENTANMELDUNG

(11) **EP 4 730 175 A1**
(43) Veröffentlichungstag der Anmeldung: **22.04.2026**
(21) Anmeldenummer: 24207451.6
(22) Anmeldetag: 18.10.2024
(51) Int. Cl.: G06F 21/57, G06F 8/65, H04L 9/40

(54) **VERFAHREN ZUM AKTUALISIEREN EINER KOMPONENTE, EINER APPLIKATION IN EINER BETRIEBSUMGEBUNG, COMPUTERPROGRAMM UND DATENTRÄGER**

(71) Anmelder: Siemens Aktiengesellschaft, 80333 München (DE)
(72) Erfinder: Schnitzer, Ronald, 80469 München (DE); Spieckermann, Sigurd, 21614 Buxtehude (DE)
(74) Vertreter: Siemens Patent Attorneys

(57) **Zusammenfassung**

Die Erfindung betrifft ein Verfahren zum Aktualisieren einer Komponente (12) einer Applikation in einer Betriebsumgebung (10), wobei die Komponente (12) einem Bereich (14) zugeordnet ist, und die Betriebsumgebung (10) eine Rechteverwaltung (16) aufweist, in welcher für einen jeweiligen Benutzer für jeden Bereich (14) festgelegt ist, ob eine Freigabeberechtigung für Änderungsanträge (22) vorliegt, wobei zum Aktualisieren der Komponente (12) ein Änderungsantrag (22) eines ersten Benutzers empfangen wird, und für eine Freigabe des Änderungsantrags (22) durch einen zweiten Benutzer anhand der Rechteverwaltung (16) überprüft wird, ob für den zweiten Benutzer die Freigabeberechtigung für den Änderungsantrag (22) hinterlegt ist, und ermittelt wird, ob für die Freigabe ein Ausschlusskriterium erfüllt ist, das abhängig von bisherigen Freigaben des zweiten Benutzers ist, und in Abhängigkeit von dem Ausschlusskriterium die Freigabe erfolgt und die Komponente (12) aktualisiert wird. Ferner betrifft die Erfindung ein Computerprogramm und einen Datenträger.

## Beschreibung

Die Erfindung betrifft ein Verfahren zum Aktualisieren einer Komponente einer Applikation in einer Betriebsumgebung, wobei die Applikation mehrere Komponenten aufweist beziehungsweise umfasst, gemäß dem Patentanspruch 1. Ferner betrifft die Erfindung ein Computerprogramm und einen dazu korrespondierenden, elektronisch lesbaren Datenträger, gemäß den Patentansprüchen 9 und 10.

Heutzutage wird bei der elektronischen Datenverarbeitung immer häufiger auf Methoden des maschinellen Lernens, welche unter dem Begriff künstliche Intelligenz (KI) zusammengefasst werden, gesetzt. Aufgrund reger Diskussionen über Vor- und Nachteile, welche durch die Verwendung von künstlicher Intelligenz auftreten können, gibt es bereits in einigen Jurisdiktionen geplante Gesetzgebungen über eine entsprechende Regulierung von künstlicher Intelligenz. In der Europäischen Union (EU) befasst sich der sogenannte Al-Act damit, bei dem eine kategorische Klassifizierung für KI-Systeme eingeführt wird, wobei jede Kategorie auf Grundlage des mit dem betreffenden KI-System verbundenen möglichen Risikos definiert wird. Das entsprechende Klassifizierungssystem schreibt für jede Kategorie spezifische Compliance-Anforderungen vor. So unterliegen beispielsweise KI-Systeme, die als unannehmbares Risiko eingestuft werden, einem Verbot innerhalb der Gerichtsbarkeit der Europäischen Union, während für solche, die als geringes Risiko eingestuft werden, keine verbindlichen Verpflichtungen gelten.

KI-Systeme, die als hohes Risiko eingestuft werden, müssen eine Reihe detaillierter Kriterien erfüllen, die im Folgenden als Hochrisikoanforderungen (englisch "high risk requirements", HRR) bezeichnet werden. In diese Hochrisikokategorie fallen insbesondere KI-Systeme, die Sicherheitskomponenten von Produkten bereitstellen, die unter EU-Rechtsvorschriften fallen oder KI-Systeme, die Bestandteil kritischer Infrastruktur sind.

Der Al-Act muss noch in nationale Gesetze übersetzt werden, welche entsprechende Normen begründen. Die HRRs sind ein zentrales Element des Al-Acts und beruhen auf dem Konzept der "vertrauenswürdige KI". Das Konzept der Vertrauenswürdigkeit in der KI umfasst die Bereich Sicherheit, Transparenz und Robustheit.

Dabei werden für die Bewertung der Konformität eines KI-Systems verschiedenste Interessensgruppen befragt. Darunter beispielsweise KI-Experten, Software-Ingenieure, Sicherheitsingenieure, KI-Ethikexperten und Fachleute mit domänenspezifischem Wissen, das beispielsweise vom Anwendungsbereich des KI-Systems abhängt. So kann jeder Teilnehmer einzigartige Perspektiven in die Bewertung des KI-Systems und somit in die Einhaltung der Vorschriften einbringen.

Zur Einhaltung des Al-Acts ist eine technologische Umsetzung erforderlich, die eine wirksame Kontrolle verschiedener Fachkenntnisse der unterschiedlichen Interessensgruppen bei der komplexen Entwicklung von KI-Systemen, beispielsweise im Hinblick auf Code-Review-Freigabe und kontinuierliche Integration, ermöglicht. Da ferner verschiedene Perspektiven, wie Sicherheit, Ethik, rechtliche Aspekte oder Domain-Knowhow, im Widerspruch zueinander stehen können, ist ein ausgeklügeltes System zur Steuerung dieser Rollen im Kl-Entwicklungsprozess von entscheidender Bedeutung.

Aufgabe der vorliegenden Erfindung ist es daher, ein Verfahren, ein Computerprogramm sowie einen Datenträger bereitzustellen, durch welche für eine Betriebsumgebung, wie beispielsweise eine DevOps-Plattform, die für eine Entwicklung eines KI-Systems dient, anhand einer Rechteverwaltung eine domänenspezifische, granulare Freigabe für Komponenten realisiert wird. DevOps ist ein Kofferwort aus den Begriffen Development (englisch für Entwicklung) und IT Operations (engl. für IT-Betrieb).

Diese Aufgabe wird erfindungsgemäß durch die Gegenstände der unabhängigen Patentansprüche gelöst. Vorteilhafte Ausgestaltungen und Weiterbildungen der Erfindung sind Gegenstand der abhängigen Ansprüche, der Beschreibung sowie der Zeichnung.

Ein erster Aspekt der Erfindung betrifft ein Verfahren zum Aktualisieren einer Komponente einer Applikation in einer Betriebsumgebung, wobei die Applikation mehrere Komponenten aufweist, und die jeweilige Komponente einem Bereich von wenigstens zwei Bereichen zugeordnet ist, und die Betriebsumgebung eine Rechteverwaltung aufweist, in welcher für einen jeweiligen Benutzer für jeden der wenigstens zwei Bereiche festgelegt ist beziehungsweise wird, ob eine Freigabeberechtigung für einen Änderungsantrag vorliegt beziehungsweise für den Benutzer erteilt ist beziehungsweise wird. Erfindungsgemäß wird zum Aktualisieren der Komponente an einer Schnittstelle ein Änderungsantrag eines ersten Benutzers empfangen, und der Änderungsantrag umfasst dabei eine aktualisierte Version der Komponente, und für eine Freigabe des Änderungsantrags durch einen zweiten Benutzer wird anhand der Rechteverwaltung überprüft, ob für den zweiten Benutzer die Freigabeberechtigung für den Änderungsantrag hinterlegt ist. Erfindungsgemäß wird ebenfalls ermittelt, ob für die Freigabe eine Ausschlusskriterium erfüllt ist, das abhängig von bisherigen Freigaben des zweiten Benutzers ist, und in Abhängigkeit von dem Ausschlusskriterium erfolgt die Freigabe woraufhin die Komponente aktualisiert wird, indem die aktualisierte Version in der Betriebsumgebung, insbesondere anstelle der bisherigen Version der Komponente, hinterlegt wird.

Bei der Betriebsumgebung kann es sich insbesondere um eine DevOps-Umgebung, wie beispielsweise eine Software-Entwicklungsverwaltung handeln. Dabei kann die Applikation insbesondere beispielsweise ein Computerprogramm umfassen oder als solches ausgebildet sein, wobei die jeweilige Komponente beispielsweise ein Programmteil, ein Quellcode (englisch Source Code) und/oder eine entsprechende Dokumentation für die Applikation sein kann. So können beispielsweise alle Komponenten, welche eine Dokumentation für die Applikation umfassen, einem Bereich "Dokumentation" zugeordnet werden. Alle Quellcodedateien können beispielsweise einem Bereich "Code" zugeordnet werden und so weiter.

Die Rechteverwaltung legt beispielsweise fest, ob ein Benutzer überhaupt einen Änderungsantrag stellen kann, wobei dies in der Regel durch jeden an der beziehungsweise für die Betriebsumgebung registrierten Benutzer durchführbar ist. Ferner ist beziehungsweise wird durch die Rechteverwaltung festgelegt, ob ein eingereichter Änderungsantrag übernommen und somit in die Applikation mitaufgenommen wird, wie dies beispielsweise mittels einem sogenannten "Merge Request" der Fall sein kann. Der Änderungsantrag wird durch den ersten Benutzer derart gestellt, dass eine aktualisierte Komponente, beispielsweise ein überarbeiteter Quellcode an einer Schnittstelle der Betriebsumgebung, wie beispielsweise einer API und/oder einem Laufwerk für einen Datenträger, mit der Bitte beziehungsweise einem Antrag, beispielsweise in Form einer Datei, diese in die Applikation, insbesondere beispielsweise in deren Hauptzweig, mitaufzunehmen, hinterlegt wird.

Der zweite Benutzer, welcher insbesondere die Position beziehungsweise Rolle eines Verwalters beziehungsweise eines Administrators hat, ist beispielsweise berechtigt, für den Bereich "Code" eingereichte Änderungsanträge freizugeben. Erfolgt nun die Freigabe durch den zweiten Benutzer für den von dem ersten Benutzer eingereichten Änderungsantrag, wird das Ausschlusskriterium überprüft und somit verifiziert, ob dieses erfüllt ist. Ist dies nicht der Fall wird die Freigabe des Änderungsantrags verweigert und die Komponente, welche aufgrund des ersten Benutzerwunsches aktualisiert werden sollte, nicht geändert. Ergibt die Überprüfung, dass der Änderungsantrag angenommen wird, wird die Änderung übernommen und somit die aktualisierte Version der Komponente insbesondere in einem Speicherbereich, wie beispielsweise eine Festplatte und/oder ein Magnetband, gespeichert. Dabei kann der zweite Benutzer die Freigabe insbesondere an einer Schnittstelle, wie beispielsweise einem Terminal, vornehmen beziehungsweise anstoßen. Ist der zweite Benutzer beispielsweise berechtigt, sowohl für den Bereich "Dokumentation" als für den Bereich "Code" jeweils Änderungsanträge freigeben zu können, kann beispielsweise ein Ausschlusskriterium sein, dass wenn durch diesen zweiten Benutzer bereits eine Freigabe für den Bereich "Dokumentation" erfolgt ist, eine Freigabe im Bereich "Code" nicht mehr vorgenommen werden kann, da sich diese beiden Bereiche beispielsweise aufgrund einer Vorgabe, wie einer Gesetzesverordnung, und/oder eines Interessenkonflikts ausnehmen, um durch eine Person freigegeben zu werden. So kann eine "Gewaltenteilung" für mehrere Benutzer, insbesondere feingliedrig, realisiert und dadurch beispielweise eine Stabilität der Applikation erhöht werden.

Mit anderen Worten ist eine Rechteverwaltung für mehrere Benutzer in einer DevOps-Umgebung gezeigt, in welcher für eine Applikation mehrere verwendete Komponenten, die wenigstens in zwei Bereiche beziehungsweise Bereichsgruppen eingeteilt sind, verwaltet beziehungsweise gespeichert werden. Dabei kann an einer Schnittstelle eine eingereichte Änderung für eine Komponente empfangen werden, und die Komponente, für die eine eingereichte Änderung vorliegt, wird mittels beziehungsweise nach einer Freigabe beziehungsweise einem Genehmigungsprozess aktualisiert. Für den Genehmigungsprozess wird für eine an einer Schnittstelle empfangene Benutzereingabe des zweiten Benutzers anhand eines hinterlegten Benutzerprofils beziehungsweise Berechtigungsprofils, das für jede der Bereichsgruppen die Berechtigung des jeweiligen Benutzers zur Freigabe beziehungsweise Genehmigung umfasst, die Berechtigung überprüft wird, und mittels des Ausschlusskriteriums, welches abhängig von einer für eine weitere Komponente erfolgte Freigabe ist, der Genehmigungsprozess beendet wird.

Ein Vorteil des erfindungsgemäßen Verfahrens ist, dass beispielsweise eine besonders granulare Freigabe für Komponenten ermöglicht wird, sodass die Applikation beispielsweise besonders vorteilhaft auf einem Steuergerät beispielsweise zum Steuern einer Fertigungsanlage eingesetzt werden kann. Alternativ oder zusätzlich kann die Applikation beispielsweise zur Verwendung eines Large Language Modells (LLM) oder einer anderen Anwendung des maschinellen Lernens angewandt werden.

In vorteilhafter Ausgestaltung der Erfindung wird anhand des Ausschlusskriteriums festgelegt, dass eine bereits erfolgte Freigabe für einen ersten Bereich der wenigstens zwei Bereiche die Freigabe für einen zweiten Bereich der Bereiche ausschließt. Mit anderen Worten wird, beispielsweise um eine Gewaltenteilung mehrerer Benutzer, insbesondere in Form von einem Entwickler beziehungsweise Verwalter, und somit quasi mehreren zweiten Benutzern, die grundsätzlich für mehrere Bereich zuständig sein können, zu erreichen, jeder der zweiten Benutzer nur dazu ermächtigt für einen der Bereiche Änderungsanträge freigeben zu können. So kann quasi nach dem Vier-Augen-Prinzip, beispielsweise wenn ein Benutzer eine Source-Code-Änderung akzeptiert, die zugehörige Dokumentation nur durch einen weiteren zweiten Benutzer freigegeben werde, sodass beispielsweise ein Missbrauch und somit beispielsweise eine fehlerhafte Applikation vorteilhafterweise vermieden werden kann.

In weiterer vorteilhafter Ausgestaltung der Erfindung ist das Ausschlusskriterium abhängig von einer Klassifizierung der zu aktualisierenden Komponente. Beispielsweise kann die jeweilige Komponente beziehungsweise auch einer der jeweiligen Bereiche Einfluss auf das Ausschlusskriterium nehmen. So können beispielsweise für den Betrieb der Applikation einige Komponenten als kritisch und andere als weniger kritisch eingestuft werden, sodass das Ausschlusskriterium beispielsweise nur bei als kritisch klassifizierten Komponenten den Ausschluss der Freigabe für zwei Bereiche vorsieht, wohingegen beispielsweise bei einer als unkritisch eingestuften Komponente der zweite Benutzer beispielsweise diese Komponente für den Bereich "Code" aber auch eine weitere Komponente für den Bereich "Dokumentation" freigeben kann. Dadurch ergibt sich der Vorteil, dass die Granularität der Rechteverwaltung beziehungsweise des Freigebens einzelner Applikationskomponenten besonders fein abgestuft sein können.

In weiterer vorteilhafter Ausgestaltung der Erfindung wird bei der Rechtverwaltung für den jeweiligen Benutzer die Freigebeberechtigung des Änderungsantrags, insbesondere für den jeweiligen Bereich, anhand einer Gruppenrichtlinie für die Benutzer, und/oder, insbesondere individuell, direkt für die jeweilige Komponente, und somit insbesondere auf Komponentenebene, vergeben. Mit anderen Worten können mehrere Benutzer beispielsweise zu einer Gruppe Administratoren, Maintainer oder dergleichen zusammengefasst sein, und beispielsweise für diese die Freigabeberechtigung für den Bereich "Code" erteilt werden, sodass bei der Rechteverwaltung nicht individuell für einen Benutzer das Recht gesetzt werden muss. Zusätzlich oder alternativ kann beispielsweise für die jeweilige Komponente, beispielsweise für ein selbsterstelltes Skript, das beispielsweise in einer Testumgebung von einem Benutzer erstellt wird, dieser somit Eigentümer der zugehörigen Datei und somit der Komponente sein. So kann dieser alleine und immer über Änderungsanträge des entsprechenden Files oder der Datei beziehungsweise der entsprechenden Komponente entscheiden. Dadurch ergibt sich der Vorteil, dass die Rechteverwaltung besonders effizient und präzise verwendet werden kann.

In weiterer vorteilhafter Ausgestaltung der Erfindung wird, falls die Freigabeberechtigung des Änderungsantrags für den zweiten Benutzer direkt für die Komponente vergeben ist, die entsprechende Komponente immer durch den zweiten Benutzer aktualisierbar, unabhängig von dem Ausschlusskriterium. Mit anderen Worten wird, falls eine Freigabeberechtigung explizit für einen Benutzer für eine Komponente vergeben ist, dieser immer berechtigt, eine Aktualisierung durchzuführen, unabhängig von einem Ausschlusskriterium, beispielsweise des zugehörigen Bereichs der Komponente. Dadurch ergibt sich der Vorteil, dass das Verfahren besonders effizient angewandt werden kann.

In weiterer vorteilhafter Ausgestaltung der Erfindung wird, falls der zweite Benutzer für mehr als einen der Bereiche eine Freigebeberechtigung des Änderungsantrags aufweist, das Ausschlusskriterium für den zweiten Benutzer nach dem Freigeben des ersten Änderungsantrags erstellt beziehungsweise greift dieses. Mit anderen Worten kann ein Benutzer, der beispielsweise berechtigt ist, für den Bereich "Code" und für den "Dokumentation" eine Freigabe zu erteilen, bis zu einer tatsächlichen ersten Eingabe die Möglichkeit bestehen, dass er sowohl den Bereich "Code" als auch den Bereich "Dokumentation" freigibt. Erfolgt nun eine erste Freigabe, beispielsweise in dem Bereich "Dokumentation", ist nun das Ausschlusskriterium für diesen, insbesondere zweiten, Benutzer, erfüllt, sodass dieser für zukünftige Aktualisierungs- beziehungsweise Änderungsanträge nur noch im Bereich "Dokumentation" und nicht mehr im Bereich "Code" freigeben kann. Dadurch ergibt sich der Vorteil, dass das Verfahren besonders flexibel, insbesondere von dem zweiten Benutzer beziehungsweise einem Verwalter, eingesetzt werden kann, wodurch insbesondere auch besonders von spezifischen Domänenwissen für einen entsprechenden Bereich profitiert werden kann.

In weiterer vorteilhafter Ausgestaltung der Erfindung wird die Freigabe des Änderungsantrags durch den zweiten Benutzer an der Schnittstelle und/oder einer weiteren Schnittstelle empfangen. Mit anderen Worten benutzt der zweite Benutzer insbesondere eine Mensch-Maschine-Schnittstelle, um den von dem ersten Benutzer an der Schnittstelle eingereichten beziehungsweise hinterlegten Änderungsantrag zu überprüfen, insbesondere zu sichten und dann beispielsweise mittels eines Auswahlmenüs an der Schnittstelle und/oder der weiteren Schnittstelle freizugeben. Dadurch ergibt sich der Vorteil, dass der Änderungsantrag besonders einfach von dem zweiten Benutzer bearbeitet werden kann.

So wird in weiterer vorteilhafter Ausgestaltung der Erfindung dem zweiten Benutzer ein Auswahlelement in Abhängigkeit von dem Ausschlusskriterium bereitgestellt. Überprüft der zweite Benutzer beispielsweise an der (oder der weiteren) Schnittstelle, ob Änderungsanträge von einem ersten Benutzer vorliegen und wählt er diese, beispielsweise mittels eines bestimmten Eingabegeräts, wie einem Terminal und/oder beispielsweise einer Computermaus, aus, kann ein kontextsensitives Auswahlmenü angezeigt werden, in welcher Rolle beziehungsweise für welchen Bereich der zweite Benutzer einen entsprechenden Änderungsantrag einer Menge an Änderungsanträgen freigeben kann. Dadurch ergibt sich der Vorteil, dass das Verfahren besonders vorteilhaft von dem Benutzer bedient werden kann.

Ein zweiter Aspekt der Erfindung umfasst ein Computerprogramm. Das Computerprogramm kann beispielsweise in einem Speicher einer elektronischen Recheneinrichtung, welche zumindest einen Teil des Verfahrens durchführt, geladen werden und umfasst Programmmittel, um die Schritte des Verfahrens auszuführen, wenn das Computerprogramm in der elektronischen Recheneinrichtung beziehungsweise einer Steuerungseinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm wie soeben vorgestellt umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Es zeigt:

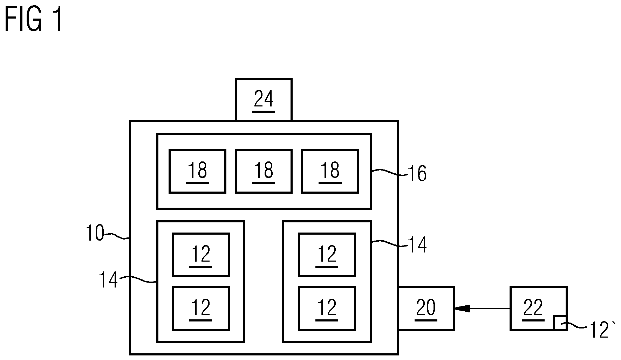

- FIG 1: eine schematische Ansicht einer Betriebsumgebung, bei welcher mehrere Komponenten einer Applikation hinterlegt sind und mit der ein Verfahren zum Aktualisieren einer der Komponenten durchführbar ist.

Die einzige Figur, FIG 1, zeigt eine Betriebsumgebung 10, welche mehrere Komponenten 12 für eine Applikation, welche beispielsweise als ein ausführbares Programm ausgebildet ist, aufweist, wobei die jeweilige Komponente 12 einem Bereich 14 von wenigstens zwei Bereichen 14 zugeordnet ist beziehungsweise zugeordnet wird. Die Betriebsumgebung 10 weist ferner eine Rechteverwaltung auf, in welcher für einen jeweiligen Benutzer für jeden der wenigstens zwei Bereiche 14 festgelegt ist beziehungsweise wird, ob eine Freigabeberechtigung für einen Änderungsantrag vorliegt, wobei dies insbesondere anhand eines jeweiligen Benutzerprofils 18 für den jeweiligen Benutzer erfolgen kann.

Anhand der Betriebsumgebung 10 soll ein Verfahren zum Aktualisieren einer der Komponenten 12 der Applikation vorgestellt werden, wobei zum Aktualisieren der Komponente 12 an einer Schnittstelle 20 ein Änderungsantrag 22 eines ersten Benutzers empfangen wird und der Änderungsantrag 22 eine aktualisierte Version der Komponente 12' umfasst, und für eine Freigabe des Änderungsantrags 22 durch einen zweiten Benutzer anhand der Rechteverwaltung 16 überprüft wird, ob für den zweiten Benutzer die Freigabeberechtigung für den Änderungsantrag 22 hinterlegt ist und ermittelt wird, ob für die Freigabe ein Ausschlusskriterium erfüllt ist, das abhängig von bisherigen Freigaben des zweiten Benutzers ist und in Abhängigkeit von dem Ausschlusskriterium die Freigabe erfolgt und die Komponente aktualisiert wird, indem die aktualisierte Version in der Betriebsumgebung 10 hinterlegt wird beziehungsweise in diese geladen.

Dabei liegt dem Verfahren die Erkenntnis zugrunde, dass beispielsweise bei der Softwareentwicklung entsprechende Betriebsumgebungen 10 als sogenannte DevOps-Plattformen, welche beispielsweise eine Versionsverwaltung, wie Git, zur Überprüfung von Quellcodes bereithalten und ferner eine kontinuierliche Integrationsinfrastruktur für die Durchführung von Prüfungen des Quellcodes und so weiter bieten. Benutzerzugriff und/oder Benutzerberechtigungen werden beispielsweise mittels der Rechteverwaltung 16 verwaltet, sodass die Betriebsumgebung 10 bereitgestellt werden kann.

Heutzutage können für DevOps-Plattformen Schutzfunktionen für beispielsweise den Quellcode in der Art integriert werden, dass bestimmte Komponenten 12 einem Benutzer als Eigentum (Owner) zugeordnet werden. Dabei können Genehmigungsregeln ein flexibles leistungsstarkes Tool für die Zuweisung von Codeeigentum und damit von Verantwortlichkeiten für konfigurierbare Teile des Quellcodes darstellen. So können beispielsweise Softwareingenieure als Benutzer (insbesondere auch Eigentümer) verpflichtet werden, Änderungen am Quellcode zu genehmigen und technische Redakteure können beispielsweise verpflichtet sein, Änderungen an der Dokumentation zu genehmigen.

Gemäß dem Stand der Technik kann beispielsweise dafür eine sogenannte CODEOWNERS-Datei hinterlegt werden, die folgenden Zeilen umfassen kann:

```
   [code] @john.doe @jane.smith
   /src/
   /tests/
  
   [documentation] @jane.smith @max.mustermann
   /docs/
```

So kann beispielsweise @jane.smith eine Änderungsanforderung genehmigen, die sowohl den Quellcode als auch die Dokumentation betrifft, so kann der Änderungsantrag alleine durch ihre Genehmigung integriert werden. Dies mag für aktuelle typische Softwareprogramme beziehungsweise Applikationen sinnvoll sein, aber bei risikoreichen Systemen künstlicher Intelligenz (KI) kann eine Trennung der Zuständigkeiten erforderlich sein, um die Qualität zu erhöhen.

Beispielsweise sollte @jane.smith nur Änderungen am Code oder der Dokumentation genehmigen können, aber nicht beides gleichzeitig, auch wenn sie die Kompetenz für Beides hat.

Die Notwendigkeit einer solchen Gewaltenteilung wird im Zusammenhang mit künstlicher Intelligenz jedoch dringlich benötigt werden.

Datenwissenschaft, Softwaretechnik und Ethik sind jeweils komplexe Bereiche, die sich gegenseitig beeinflussen. Ein Machine-Learning-Algorithmus kann beispielsweise aus datenwissenschaftlicher Sicht ansprechend sein, aber er kann anfällig für diskriminierende Verhalten beziehungsweise Voreingenommenheit sein, was ethische Fragen zu dessen Verwendung aufwirft.

Anstatt also @jane.smith zu erlauben, eine Änderungsanfrage insgesamt zu genehmigen, sollte ihre Genehmigung mit einem Bereich beziehungsweise Teilbereich oder ihrer Rolle verknüpft werden, wobei Bereiche sich gegenseitig ausschließen, sodass nicht gleichzeitig Änderungen an Code und Dokumentation durch eine Person genehmigt werden kann. Dies wird durch das hier vorgestellte Verfahren ermöglicht.

Dabei kann es Anwendungsfälle geben, beispielsweise KI-Systeme mit geringem Risiko, die keine starke Gewaltenteilung erfordern, das heißt dass sich gegenseitig ausschließende Bereiche 14 keine Rolle spielen. So würde beispielsweise eine einzige Genehmigung von @jane.smith ausreichen, um alle Bereiche 14 beziehungsweise Abschnitte zu genehmigen, mit denen sie verbunden ist, aber eine Genehmigung ist deshalb explizit mit diesen Abschnitten verbunden. Um die Verantwortlichkeit zu verbessern, wird das hier vorgestellte Verfahren verwendet, bei denen Genehmigungen explizit mit den Bereichen 14 verknüpft werden, für die sie gelten.

So wird, um dieses Problem zu lösen, das hier vorgestellte Verfahren verwendet, welches einen Ansatz mit strikter Trennung der Befugnisse für Änderungswünsche bei einer Softwareimplementierung, insbesondere von KI-Systemen, verfolgt, wobei ein vielfältiges Fachwissen der beteiligten Benutzer systematisch und effektiv in die Entwicklung und den Einsatz vertrauenswürdiger Systeme eingebracht werden kann.

So können beispielsweise in der Betriebsumgebung 10 anhand der Rechteverwaltung 16 beispielsweise mittels einer Dateispezifikation im Rahmen der CODEOWNERS-Datei sich gegenseitig ausschließende Bereiche 14 definiert werden. So beschreibt das hier vorliegende Verfahren eine Erweiterung einer Spezifikation und insbesondere auch eine Erweiterung von Benutzerschnittstellenkomponenten (User Interface) in der Betriebsumgebung 10, insbesondere somit zur Erteilung rollenbasierter Genehmigungen. So kann die CODEOWNERS-Datei eine erweiterte Spezifikation zur Definition von Rollen und zur Zuordnung von Benutzer und/oder Gruppen umfassen:

```
   -science "Data Science" (Bjohn.doe @jane.smith
   -software "Software Engineering" @john.doe @max.mustermann
   -ethics "AI Ethics" @jane.smith @joe.shmoe
```

Dabei werden einzelne Rollen deklariert, beispielsweise zunächst anhand einer Rollen-ID durch eine "∼" gefolgt von Zeichen, die einem regulären Ausdruck mit normalen Buchstaben und Ziffern entsprechen. Daraufhin kann beispielsweise ein lesbarer Name der Rolle in Anführungszeichen angegeben werden. Schließlich werden eine oder mehrere Benutzer- oder Gruppennamen angegeben, die mit der Rolle und somit dem jeweiligen Bereich 14 verbunden sind. Rollen können an beliebiger Stelle in der Datei deklariert werden, sollten aber insbesondere deklariert werden, bevor auf sie verwiesen wird. So kann insbesondere empfohlen werden, die Rollen zu Beginn in der Betriebsumgebung 10 zu deklarieren, wobei die Rollen insbesondere den Bereichen 14 entsprechen. Dabei ist eine Bedingung, welche insbesondere für das Ausschlusskriterium genutzt werden kann, dass sich Rollen beziehungsweise Bereiche 14 immer gegenseitig ausschließen. Zum Beispiel ist @jane.smith sowohl "Science" als auch "Ethics" zugeordnet. Wenn sie die Zustimmung gibt, kann sie nur eine Rolle wählen, mit der sie verbunden ist. Zum Beispiel

```
   [algorithm] -science
   /src/
  
   [code] -software
   *
  
   [ethics][2] -ethics
   jdataj
   /src/
  
   [documentation] @jane.smith
   /docs/
   jREADME.md
```

So kann @jane.smith als zweiter Benutzer ihre Freigabeberechtigung beziehungsweise Genehmigung mit ihrer Rolle beziehungsweise für den Bereich 14 "Science" verknüpfen, so werden nur Änderungen an /src/ genehmigt, nicht aber an /data/. @Jane.smith ist auch ein direkter Eigentümer von [documentation], sodass sie ihrer Genehmigung auch für die entsprechenden Komponenten 12 gilt. @jane.smith wird jedoch nicht in der Lage sein, eine weitere Genehmigung hinzuzufügen, die mit der Rolle "Ethics" verbunden ist, da sich Rollen per Definition gegenseitig ausschließen.

Um eine Genehmigung beziehungsweise Freigabeberechtigung mit einer Rolle beziehungsweise einem Bereich 14 zu verknüpfen, wird ein entsprechendes User Interface (Benutzerschnittstellenkomponente) beispielsweise um ein Auswahlmenü erweitert, das die lesbaren Namen der Gruppe auflistet, mit denen ein Benutzer gemäß der Rollendeklaration beziehungsweise der Verwaltungsrechte verknüpft ist. Für einen Anwendungsfall mit einer entsprechenden Klassifikation, die keine strenge Trennung der Bereiche 14 verlangt, kann beispielsweise eine Multiple-Choice-Widget ausgegeben werden. Dabei könnten durch den zweiten Benutzer an dem User Interface, welches insbesondere als eine weitere Schnittstelle 24 ausgebildet ist, entsprechende Einstellungen vorgenommen werden.

Zusammengefasst wird mittels des Ausschlusskriteriums festgelegt, dass eine bereits erfolgte Freigabe für den ersten Bereich 14 die Freigabe für einen zweiten Bereich 14 ausschließt. Dabei kann das Ausschlusskriterium abhängig von einer Klassifizierung der zu aktualisierenden Komponente 12 und/oder des Bereichs sein, wobei die Klassifizierung beispielsweise an eine Risikoeinschätzung beziehungsweise ein Risikolevel gekoppelt ist. Dadurch kann die Rechteverwaltung 16 beispielsweise anhand einer Gruppenrichtlinie oder für eine jeweilige Komponente 12 vergeben werden. Falls der (zweite) Benutzer direkter Eigentümer einer entsprechenden Komponente 12 kann diese immer durch ihn freigegeben werden, unabhängig von dem Ausschlusskriterium. Ferner kann der (zweite) Benutzer durch seine erste Freigabe festlegen, für welchen Bereich 14 der Applikation er zuständig ist.

Durch das hier vorgestellte Verfahren sowie ein Computerprogramm und einen elektronisch lesbaren Datenträger werden Funktionen, wie Eigentümerverhältnisse der Komponenten 12 und Freigaberegeln (Code-Owners- und Approval-Rules), um eine wichtige Gewaltenteilung beziehungsweise eine explizite Zuordnung für Freigabeberechtigungen ergänzt. So können sich Bereiche 14 gegenseitig ausschließen, wobei die entsprechende Eigenschaft des Verfahrens entscheidend für den Aufbau von KI-Lösungen im Rahmen von beispielsweise des Al-Acts sein kann.

## Patentansprüche

1. Verfahren zum Aktualisieren einer Komponente (12) einer Applikation in einer Betriebsumgebung (10), wobei die Applikation mehrere Komponenten (12) aufweist, und die jeweilige Komponente (12) einem Bereich (14) von wenigstens zwei Bereichen (14) zugeordnet ist, und die Betriebsumgebung (10) eine Rechteverwaltung (16) aufweist, in welcher für einen jeweiligen Benutzer für jeden der wenigstens zwei Bereiche (14) festgelegt ist, ob eine Freigabeberechtigung für Änderungsanträge (22) vorliegt, wobei
zum Aktualisieren der Komponente (12) an einer Schnittstelle (20) ein Änderungsantrag (22) eines ersten Benutzers empfangen wird, und der Änderungsantrag (22) eine aktualisierte Version der Komponente (12`) umfasst, und für eine Freigabe des Änderungsantrags (22) durch einen zweiten Benutzer anhand der Rechteverwaltung (16) überprüft wird, ob für den zweiten Benutzer die Freigabeberechtigung für den Änderungsantrag (22) hinterlegt ist, und ermittelt wird, ob für die Freigabe ein Ausschlusskriterium erfüllt ist, das abhängig von bisherigen Freigaben des zweiten Benutzers ist, und in Abhängigkeit von dem Ausschlusskriterium die Freigabe erfolgt und die Komponente (12) aktualisiert wird, indem die aktualisierte Version in der Betriebsumgebung (10) hinterlegt wird.

2. Verfahren nach Anspruch 1, **dadurch gekennzeichnet, dass**
anhand des Ausschlusskriteriums festgelegt wird, dass eine bereits erfolgte Freigabe für einen ersten Bereich (14) der wenigstens zwei Bereiche (14) die Freigabe für einen zweiten der Bereiche (14) ausschließt.

3. Verfahren nach Anspruch 2, **dadurch gekennzeichnet, dass**
das Ausschlusskriterium abhängig ist von einer Klassifizierung der zu aktualisierenden Komponente (12) und/oder des jeweiligen Bereichs (14).

4. Verfahren nach Anspruch 1, 2 oder 3, **dadurch gekennzeichnet, dass**
bei der Rechtverwaltung (16) für den jeweiligen Benutzer die Freigebeberechtigung des Änderungsantrags (22) anhand einer Gruppenrichtlinie und/oder direkt für die jeweilige Komponente (12) vergeben wird.

5. Verfahren nach Anspruch 4, **dadurch gekennzeichnet, dass**
falls die Freigabeberechtigung des Änderungsantrags (22) für den zweiten Benutzer direkt für die Komponente (12) vergeben ist, die entsprechende Komponente (12) durch den zweiten Benutzer, unabhängig von dem Ausschlusskriterium, aktualisierbar ist.

6. Verfahren nach einem der vorhergehenden Ansprüche, **dadurch gekennzeichnet, dass** falls der zweite Benutzer für mehr als einen der Bereiche (14) eine Freigebeberechtigung des Änderungsantrags (22) aufweist, das Ausschlusskriteriums für den zweiten Benutzer nach dem Freigeben eines ersten Änderungsantrags greift.

7. Verfahren nach einem der vorhergehenden Ansprüche, **dadurch gekennzeichnet, dass** die Freigabe des Änderungsantrags (22) durch den zweiten Benutzer an der Schnittstelle (20) und/oder einer weiteren Schnittstelle (24) empfangen wird.

8. Verfahren nach einem der vorhergehenden Ansprüche, **dadurch gekennzeichnet, dass** dem zweiten Benutzer ein Auswahlelement in Abhängigkeit von dem Ausschlusskriterium bereitgestellt wird.

9. Computerprogramm, welches direkt in einen Speicher einer elektronischen Recheneinrichtung ladbar ist, mit Programmmitteln, um die Schritte des Verfahrens nach einem der Ansprüche 1 bis 8 auszuführen, wenn das Computerprogramm ausgeführt wird.

10. Elektronisch lesbarer Datenträger mit darauf gespeicherten elektronisch lesbaren Steuerinformationen, welche zumindest ein Computerprogramm nach Anspruch 9 umfassen und derart ausgestaltet sind, dass sie bei Verwendung des Datenträgers in einer elektronischen Recheneinrichtung ein Verfahren nach einem der Ansprüche 1 bis 8 durchführen.
